(19) Europäisches Patentamt
European Patent Office
Office européen des brevets

(11) **EP 1 803 351 A1**

(12) **EUROPEAN PATENT APPLICATION**

(43) Date of publication:
**04.07.2007 Bulletin 2007/27**

(51) Int Cl.:
*A01N 65/00* (2006.01)    *A01N 57/20* (2006.01)
*A01N 53/00* (2006.01)    *A01N 43/90* (2006.01)
*A01N 43/40* (2006.01)    *A01N 25/30* (2006.01)
*C05G 3/06* (2006.01)

(21) Application number: **06380329.0**

(22) Date of filing: **21.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.12.2005 AR P050105589**

(71) Applicant: **Ideasupply.com Argentina, S.A.**
**Ciudad de Buenos Aires (AR)**

(72) Inventor: **Prola, Gustavo**
**Ciudad de Buenos Aires (AR)**

(74) Representative: **Isern-Jara, Jaime**
**P & T Intellectual Property, S.L.**
**C/ Balmes 174° 2a**
**08006 Barcelona (ES)**

(54) **Extract of the seedless pod of gleditsia amorphoides and its use as an agricultural adjuvant**

(57) Extract of the seedless pod of *Gleditsia Amorphoides* and its use as an agricultural adjuvant, <u>characterised</u> in that it has a content of soluble solids between 250 - 270 g/kg; of triterpene saponins between 60 - 75 g/kg; a conductivity (5 Brix) of 6 +/- 4mS/cm; an absorbance at 400nm (with 1.1% of the product in water) of < 0.500 AU; a foam production (5 Brix) of 160 ml; a pH (direct) equal to 3 +/- 0.3; whilst its chemical determination in g per 100g of the extract expressed as elements is total Ni = 0.51; available P = 0.28; K = 1.22; S = 0.63; Mg = 0.08 and Fe = 0.0022; whilst available P (expressed as 05P) = 0.64 and K (expressed as KO) = 1.47; moreover, the total quantity of phenols is approximately between 8.5 and 10% and of tannins is between 0.9 and 1.5%. Said adjuvant extract, which is highly soluble in water, gives the following results when subjected to tests: Oral toxicity in rats >4000mg/kg; inhalatory toxicity at a maximum nebulisable concentration of 4.89 mg/l; Primary Dermal Irritation and Ames Test, Cytotoxicity: showing that it lacks toxicity. Its absorbance at 3 Brix is between 1,230 and 1,120, and 1 g/l of Na benzoate can be used as a compatible preservative. It is produced by treating the husk of the seedless pod of *Gleditsia Amorphoides*.

For its use as a fertiliser, it is made up of two essential components, wherein a first component consists of the natural organic coadjuvant extract consisting of 30/60cc of an aqueous solution of said extract of the fruit of *Gleditsia Amorphoides* containing 250-270 g/kg of total soluble solids; 60-75 g/kg of triterpene saponins, and presenting a conductivity (5 Brix) of 5.6+/-4; an absorbance at 400 nm (with 1.1% of the product in water, v/v) of <0.500 AU; a foam production (5 Brix, ml) of >160ml; a pH (direct) of 3.9 +/-0.3 and a surface tension of 38 to 40 dyn/cm; whilst the second active component consists of 1000cc of a solution in pure water of granulated urea with a low Biuret content, < 0.5%, with a Ni content of 20%. Said solution is made up using pure water with pH 7 and with no hardness in the form of Ca+ and Mg+ ions.

For a glyphosate type herbicide at a proportion of 672 g of active substance/ha, 0.06% v/v of the extract is added as an adjuvant.

For formulations of herbicides, 1.0 a 1.5% v/v of the extract is added to the final formulation of the product.

In a pyrethroid type insecticide used for controlling the citrus leafminer *(Phyllocnistis citrello Staiton),* between 0.25 and 0.50% of the adjuvant is used with 0.15% of avermectin.

For a Paraquat type defoliant, the formulation comprises approximately 0.25% v/v of the aqueous extract, an emulsifiable oil at 1% and a 1l/ha concentration of Paraquat.

For a nitrogenated fertiliser, the formulation is made up of between 10 and 46 g/100g of organic Ni and between 30 and 60 cc of the aqueous extract, with a pH of 6.9, a Biuret content of 0.15g/100g and a surface tension of 36.6 dyn/cm.

For a spray solution, 30 to 60 ml of said aqueous extract is added directly for each 100 litres of solution.

Technical specifications:

It has a content of soluble solids between 250 - 270 g/kg; of triterpene saponins between 60 - 75 g/kg; a conductivity (5 Brix) of 6 +/- 4mS/cm; an absorbance at 400nm (with 1.1% of the product in water) of < 0.500 AU; a foam production (5 Brix) of 160 ml; a pH (direct) equal to 3 +/- 0.3; whilst its chemical determination in g per 100g of the extract expressed as elements is total Ni = 0.51; available P = 0.28; K = 1.22; S = 0.63; Mg = 0.08 and Fe = 0.0022; whilst available P (expressed as 05P)

EP 1 803 351 A1

= 0.64 and K (expressed as KO) = 1.47; moreover, the total quantity of phenols is approximately between 8.5 and 10% and of tannins is between 0.9 and 1.5%.

## Description

The present invention relates to products for agricultural use in general and more particularly it refers to an organic adjuvant for agricultural use produced by treating the fruit, consisting of the seedless pods of the tree commonly known as "Espina de Corona" or "Coronillo", whose scientific name is *Gleditsia Amorphoides.*

An additional purpose of the present invention lies in providing an adjuvant produced for the proposed purpose, which can be used for crop spraying of all types and areas on land or from the air, combined in a solution with agrochemicals (such as herbicides, insecticides, fungicides and biocides in general) or for use in the commercial formulation of glyphosate (isopropylamine salt at 48%) or for formulations of other agrochemicals.

The invention basically involves extracting an organic extract from the seedless pods of said tree, by means of a specific industrial procedure, said extract constituting an adjuvant that, when added to active substances, helps to protect the environment and reduce the environmental impact of most adjuvants, wetting agents or surfactants that are added to agrochemicals known on the market.

The main advantages provided by the object of the invention, in any of its solid or liquid forms, due to its physicochemical characteristics and taking as a reference a specific case of its use in the formulation of glyphosate, are: its lower cost, no need for defoaming agents as it produces very little foam, lower doses of surfactant required than the currently formulated product (lower by a 10:1 ratio), thus reducing the costs of handling, deposits, etc., and it fundamentally reduces the risks involved in the toxicology of glyphosate.

The factors that differentiate it from known adjuvant products in its use in crop spraying solutions include:

the fact that it is an organic product; it is used in lower doses than known products (lower by a 4:1 ratio), with the consequent saving in handling, deposits, etc. Its price is more reasonable, it reduces the risks of toxicity of the end product and it is not aggressive to the environment or to human beings and animals.

In general, the following description refers to the aqueous extract obtained from *Gleditsia Amorphoides.* Obviously, it can be used without any problems, for example, in a solid state.

PRIOR ART:

Persons skilled in the art know that the Argentinean agricultural market makes intensive use of "surfactants", which are products that reduce the surface tension of water, favouring the penetrability of the different agrochemical compounds used on all the crops grown throughout the country, whether extensive or intensive.

80% of these surfactants are used in the different applications of herbicides, insecticides and fungicides, some of which are already incorporated into their formulation, whilst 20% are organochlorines that are widely used at present. All the aforementioned products are of chemical origin, which means that they are not organic.

A solution must be prepared for crop spraying that contains the active substance, biocide or fertiliser, the surfactant and water.

It is well known that surfactant or adjuvant products are classified into:

a) - Nonionic: based on nonylphenol ethoxylate - Ethoxylated alcohol

b) - Anionic: Sodium dodecylbenzene sulphonate - Sodium lauryl ethoxy sulphate - Calcium lignosulphonate.

c) - Cationic: Benzalkonium chloride - Ethoxylated amines.

d) - Amphoteric: Alkyl betaines - Sulphobetaines.

e) - Siliconates: Organosiliconates basically have the same structure as conventional surfactants, but their lipophilic portion consists of siloxane groups that have a Si group in their structure, in addition to the oxyethylene hydrophylic chain.

f) - Oils: Compounds deriving from petroleum and vegetable oils that do not show significant hypotensive activity.

Most of these products, about 80% as was mentioned, are from the nonionic group, i.e. deriving from chemical syntheses that are being prohibited in the European Economic Community due to their proven carcinogenic and teratogenic effects, whose increasingly limited use in agricultural tasks shows that they are undergoing a decline and are being replaced by natural non-contaminant products.

Most commercial glyphosates (isopropylamine salt) have a low toxicity, but as a surfactant has to be added to fulfil its function as a total action herbicide, e.g. POEA (polyoxyethylene-amine), its toxicity increases by between threefold and fivefold.

Therefore, by mixing the commercial formulation the toxicity of the product is increased, as it takes on it toxicological characteristics that glyphosate alone does not have. Consequently, the pesticide product thus prepared causes serious poisoning and problems to the gastrointestinal tract, lungs, respiratory system, kidneys and central nervous system of the humans who have to handle them. It increases blood pressure, brings about destruction of red blood cells, causes irritation to the skin and eyes, whether accidentally or as a result handling and using it in the fields. Furthermore, it seriously pollutes the land and considerably damages the natural habitat, affecting all those who frequent it, both humans and animals.

In the case of application to fertiliser products, it can be said that numerous formulations are used in the prior art, among which the following trade names can be cited:

SOL UAN is a urea ammonium nitrate solution containing 32% Ni.

SOL PLUS is also used, with 12% Ni and 26 % S. It is a mixture of the two with varying doses of Ni and S, which is compatible with any of the known herbicides.

The commercially named SOL FOS contains 9% Ni and 27% Ph. Another called "FOLIAR SOL U" contains 20% Ni.

Another is that known as UAN 32, which is made from Ni from three origins (Urea, Ammonium and Nitrate).

Ammonium sulphate is another very widely used product that is made from Ni of nitric and ammonia origin plus S and mixtures thereof.

Continuing with the range of known liquid fertilisers, the following could also be mentioned: WUXAL Ca with 10% Ni + Ca; NITROPLUS 9 and 18 with 10% Ni + Ca, CITROLINO with 10% Ni + microelements, and NITROSKA FOLIAR with 10% Ni + 4% Ph + 7% K.

These known fertilisers do not interfere with that disclosed in the present documentation, which is based on the discovery of an adjuvant or wetting agent using a natural resource that is contained in the seedless fruit of "Espina de Corona", which is scientifically known as *Gleditsia Amorphoides,* combined with granulated Urea dissolved in water. It is thus possible to achieve a nitrogenated fertiliser with the unique characteristic of having an organic wetting agent incorporated into its formulation.

From the search carried out under Numbers 05/10/118-119 and 120 by the INPI's Department of Technological Information in its databases, no reference has been found to the production of an adjuvant based on said variety of tree.

By way of an illustrative complement only, said Department provided patent references that do not interfere with the object of the present invention, relating to pesticides and germicides deriving from plant products, which are listed below:

CN1102056 "Plant-based germicide" belonging to Sanlian Biochemistry Factory Y (CN). 1995. The present invention discloses a germicide for plants. It uses an effective combination of proportions of trichoderma fungi and traditional Chinese medicines using the bark of philodendron, sweet wormwood, rhubarb and *gleditsia sinensis* to control downy mildew or rust fungus in plants and fruit trees.

CN1122653 "Emulsion of Yansensu and its method of preparation" belonging to Bingyun Yang (CN); Zihe Sui (CN); Ren Jiuwen (CN)-1996. The pesticide emulsion comprises 40-50 extract; 18-25% ethyl alcohol and 30-40% assistant, wherein the extract consists of (weight %) 50-60% tobacco leaves; 15-20% root of sophora flavescens; 15-20% root of stemona; 5-10% fruit of gleditsia. The preparation of the method includes slicing, washing, soaking, boiling for 100-120 minutes, precipitating, centrifugal filtering, concentrating, addition of ethyl alcohol, addition a penetrant, emulsifier and synergist. It is highly effective, has a wide spectrum and is slightly toxic, but it does not harm the human body or animals.

CN1153599 "Plant-based pesticide" belonging to Xu Guizhu(CN); Fenglan(CN); Xu qinghui(CN).1997. Pesticide for plants prepared using natural plant materials including *Semen strychni,* croton, almond, *Gleditsia sinensis,* white pepper, malt, etc. and by soaking in a liquid mixture of volatile solvents methanol, ethylic alcohol and chloroform to extract its active components, which are then mixed. It has strong plant and crop pest-killing effects and it can increase disease resistance of crops and plants without having harmful effects on the human body and farm animals.

CN1168228 "Wettable powder pesticide and its preparation", belonging to Liu Lidong (CN); Li Jinqing(CN). 1997. It consists of Bavistin; thiram, penetrant; *Gleditsia sinensis* powder, and clay powder. It has a strong systemic action and an excellent fungicidal effect on fungal diseases in fruit trees and can be used jointly with organophosphorous pesticides and pyrethrin. It is mainly used to prevent and control blackheart of pears and its production process is simple, does not waste water or gas, and does not produce waste and environmental pollution.

CN1433696 Wnag Huaiyong (CN): zhang xiating(CN). 2003. This is a dry pollen agent and a wettable powder agent containing pyrethrins. It relates to a kind of pyrethrum dried pollen agent and its wettable powder, and its method of preparation that includes the following steps: pulverising the stems, leaves and dried flowers of pyrethrum, adding diatomite or talcum powder or clay, which are added in a quantity of 10-30% of the weight of stems and leaves of pyrethrum, evenly mixed, pulverised and passed through a 200-mesh screen to obtain the pyrethrum pollen. According to the weight percentage of said pyrethrum powder, 3-5% of TBHQ or BHT, 5-15% gleditsia fruit or tea saponin, 1-3% of synergistic ether or octachlorodipropyl ether or synergistic amine, are mixed, pulverised and passed through a 200-mesh screen.

Said pyrethrum pollen and all the auxiliary materials are evenly mixed to obtain the wettable powder of the invention.

It should be repeated that said report obtained by the INPI from its national and international databases found no previous records referring to the production of an adjuvant compound using *Gleditsia Amorphoides,* as disclosed in the present documentation.

In order to properly characterise the data that have led the applicant to discover the adjuvant herein disclosed, a brief description of said plant should be given.

The *Gleditsia Amorphoides* tree, commonly known as "Espina Corona", grows to 15 m high with a trunk diameter of 30 to 60 cm, which, like its branches, presents numerous reddish-coloured long branched thorns. Its fruit is a legume that is generally sickle-shaped, rigid, blackish in colour, indehiscent, somewhat pulpous with a slightly septate endocarp, and which contains between 6 and 10 seeds.

This species is extremely important in agriculture and forestry in northern Argentina. In addition to the importance of its wood for carpentry, it is characterised by the fact that its seeds are used to produce a very good hydrocolloid thickener, which is suitable as a gelling agent for food products such as jams, jellies and solid desserts and as an emulsifier in mayonnaises and sauces instead of fats.

The fragmented remains of the pods that contained the seeds are a waste product of the manufacturing procedure of said thickener made from its seeds, and they are separated in the sieves used during the process.

It occurred to the applicant to investigate the separated husk, which had until then been a waste product, by subjecting it to another industrial process. The result of this was the active substance contained in the husk that can be obtained by dissolution and, as has been proved by the applicant through the experiments carried out, the resulting product is a natural adjuvant that contains a significant amount of triterpene saponins.

To ensure that the present invention can be understood so that it may be readily put into practice, a precise technical and legal description of some different embodiments will be given in the following paragraphs, referring therein to the attached illustrative drawings, all as a purely illustrative but non-limiting example of the invention, whose components may be selected from various equivalents whilst adhering to the principles of the invention established in the present documentation.

DRAWINGS:

The attached schematic figures are as follows:

Figure 1 shows the gramineae control percentages.

Figure 2 shows the dicotyledoneae control percentages.

Figure 3 shows the total weed control percentages.

DESCRIPTION:

According to said immediate tests that have been carried out, the adjuvant product of the present invention is an aqueous product that is rich in the saponin fraction of the seedless fruit of *Gleditsia Amorphoides,* wherein said saponin fraction gives it surfactant characteristics that make it suitable as a component of formulations of herbicides, fertilisers and other agrochemicals.

It is known that saponins are molecules that have triterpene centres in their structure bound to glycosides that make them hydrophilic and lipophilic, thus favouring the penetration of the active substance and its circulation through the vascular system of the plant. In this way adjuvants added to formulations, e.g. of herbicides, also reduce the surface tension of the spray mixtures, increasing the contact surface and the adherence between the active substance of the herbicide, in this case, and the application surface.

Composition of the *Gleditsia Amorphoides* adjuvant:

Content of soluble solids = 250 - 270 g/kg

Triterpene Saponins = 60 - 75 g/kg

Conductivity (5 Brix) = 6 +/- 4mS/cm

Absorbance at 400nm (with 1.1 % of the product in water) = < 0.500 AU

Foam production (% Brix) = 160 ml

pH (direct) = 3 .9 +/- 0.3

Solubility = Totally soluble in water.

Recommendations: direct addition to a spray solution = between 30 and 60 ml per 100 litres of solution.

For herbicide formulations = Between 1.0 and 1.5% v/v of the product in the final formulation of the product.

Compatible preservative = 1 g/l of Na benzoate.

Shelf-life of the product = 2 years at between 5 and 25°C in sealed packaging.

The result of an analysis carried out at Microquim SA laboratories on a sample of the aqueous extract of *Gleditsia Amorphoides* obtained according to the invention gives the following determination in grams per 100 g of the sample:

Total Ni = 0.51; available P (expressed as an element) = 0.28; available P (expressed as 05 P) = 0.64; K (expressed as an element) = 1.22; K (expressed as KO) = 1.47; S (expressed as an element) = 0.63; Mg (expressed as an element) = 0.08; Co and Mo (expressed as elements) = not detectable; Fe (expressed as an element) = 0.0022.-

The following methodology was used for this analysis:

Total Ni = Kjeldahl method; available P = A.O.A.C. 993.31; K, Mg, Co, Mo, and Fe = Atomic absorption spectrophotometry; and for S = Gravimetry according to the A.O.A.C.

This study is complemented by others in progress that give a total quantity of phenols of approximately between 8.5 and 10%, measured using the Folin-Ciocalteau method.

Tannins = 0.9 to 1.5% measured using Makkar H.P.S. Bluemmel.M. Borowy N.K (J.Sci. Food Agric.61 1993 161 - 165.)

Saponins = approximately 20 - 25%. Value estimated by weight separation using tangential filtration.

Another of the uses of the invention is the possibility of having a completely organic fertiliser product that is especially suitable for making nutritional corrections to intensive or extensive fruit and vegetable crops, forests, etc. to improve their performance, being particularly effective in cases where a rapid response is required.

Another advantage of the object of the invention is the fact that the organic adjuvant produced and incorporated into the formulation of a fertiliser has a strong surfactant effect on waxy plant surfaces, favouring the rapid absorption and transport of the active substance.

It offers the possibility of this organic molecule, which has been obtained from concentrated plant extracts and incorporated into the fertiliser, acting in combination and in synergy with conventional agrochemicals, most of which are compatible.

Essentially, an important purpose and advantage of the invention, a product obtained by processing the seedless fruit of *gleditsia amorphoides,* is that it enables the industrial production of a completely organic nitrogenated foliar liquid fertiliser, thus covering the need to avoid the use of products that contaminate the environment in some way.

Furthermore, the fertiliser into whose formulation the organic wetting agent extracted from the fruit of the *Gleditsia Amorphoides* has been incorporated is the only one of its kind, i.e. it is a nitrogenated liquid fertiliser plus an organic wetting agent that is the adjuvant.

Therefore, the adjuvant or wetting agent of the invention can be applied to a fertiliser consisting of the aqueous extract resulting from the processing of the fruit of *gleditsia amorphoides,* which is used as a first component of the formulation of a liquid fertiliser, the second component of which is nitrogenated.

The second component is a Nitrogenated fertiliser with a Ni content of 20% that can be obtained by dissolving granulated urea with a low Biuret content (less then 0.5%) in water, the water being of a neutral PH and without hardness (Ca+, Mg+).

The formulation is then made up by mixing a litre of solution of granulated urea in water with a 20% Ni content as the second component, and 60 cc of the adjuvant as the first component of the product.

To complement the above, the analysis of a nitrogenated fertiliser containing the adjuvant of the invention, carried out by the National Food Safety and Quality Service (SENASA Test Report LF 9850 of 19-12-2005), is transcribed below, giving the following results:

Organic Ni = from 10 to 46 g/10g

Surface tension = 36.6 Dyn/cm

pH = 6.9

Biuret content = 0.15 g/100g

Ni was determined by the Kjeldhal method using semiautomatic equipment (PCP 1-FFC LF No. 003).

The surface tension was detected using the DuNouy tensiometer. (PCP 1-FF LF No. 017).

The pH determination (PCP 1-FFC LF No. 018).

Biuret determination by UV-Vis spectrometry (PCP 1-FFC LC No. 020).

Foliar fertilisers: National Food Safety and Quality Service (SENASA) Resolution No. 53/76.

As regards the toxicity of the adjuvant, it should be added at this point that a series of tests are currently being carried out at Laboratorios Microquim, from which the information provided so far can be summarised as follows:

Summary of the data about the Surfactant Product CU (thus named for the sake of simplicity), belonging to the Company: Ideasupply.com S.A:

Oral Toxicity in rats: > 3000 mg/kg - Products that are not normally dangerous. Dermal toxicity in rats: > 4,000 mg/kg - Products that are not normally dangerous.

Inhalatory toxicity: 4.89 mg/l - (Maximum nebulisable concentration).

Primary Dermal Irritation: Non-irritant product.

Ocular irritation: In progress.

Sensitivity Rate: In progress.

Ames test: Cytotoxity: Non-toxic product.

Mutagenicity: In progress.

Another of the applications with agrochemicals was carried out to determine the influence of the adjuvant "CU" of the invention on the action of the defoliant "Paraquat" on alfalfa *(Medicago sativa L.)*

To do this, tests were carried out to determine the effect of incorporating the surfactant "Coronillo Ultra" (CU) at 0.25% v/v and emulsifiable oil at 1% v/v into the defoliant Paraquat at a concentration of 11/ha in conditions of high and low daytime and night-time temperatures on alfalfa.

Five days after the treatment it was observed that with daytime and night-time temperatures of 30/21°C there was 17% defoliation without the addition of adjuvants, 37% with the incorporation of oil, 68% with CU and 80% with both adjuvants, whilst with temperatures of 21/123°C there was less than 10% defoliation for all the treatments.

After 10 days no differences were observed between treatments, both at high and low temperatures.

The production of new shoots in both atmospheric conditions was reduced by 75% with the addition of CU and by 86% with CU + oil compared to mechanical defoliation carried out manually.

Absorption of the active substance is affected by the temperature during application. The use of CU + shaking aided the effect of the drying agent.

Efficacy of "avermectin" and the adjuvant CU of the invention in controlling the citrus leafminer *(Phyllocnistis citrella Stainton).*

Two tests were designed in order to evaluate the effect of two concentrations of the surfactant "Coronillo Ultra" and combinations of both products in controlling the citrus leafminer *(Phyllocnistis citrella Stainton).*

One tested the action of direct contact of the products alone and as part of a mixture on second- and third-stage larvae by injecting the solution into their galleries. The other determined the effect of its application to leaf surfaces affected by galleries. In both tests methylene blue dye was added in order to trace the movement of the solution within the gallery and the larvae.

For the treatments applied to the leaf surface, effects were only recorded when the active substance spread through the epidermis and came into contact with the insect inside the mine.

The adjuvant CU increased the transfer of the solutions inside the galleries and controlled the larvae when a concentration of 0.5% was injected into them.

High concentrations of avermectin were effective when applied to the leaf surface and low doses were only effective when injected.

In mixtures of the adjuvant CU 0.25% with avermectin an increase was noted in the control of the plague compared with the different doses of the active substance without the adjuvant. Up to 90% control of the leafminer was achieved when 0.25% + avermectin 0.15% was used. The control presents a positive correlation in combined treatments of the present adjuvant + avermectin in tests.

These results suggest the reduction of the concentration of avermectin in relation to increases in the adjuvant in order to achieve a similar control of *Phyllocnisis spp.*

Finally, field tests were carried out for said treatments in a five-year-old orchard. The doses of avermectin mixed with the adjuvant showed a 75% control of the larvae and pupae compared with the absolute control.

The treatments without the surfactant gave insignificant results, showing heterogeneous behaviours.

The treatments with avermectin presented a low control percentage after 14 days. However, the treatments with avermectin + 0.25% and + 0.5 of the adjuvant showed a significant control 21 and 28 days after application, with an 85% reduction of the larvae.

As another example of application, a field test has been carried out on glyphosate formulated with 1 % of the concentrated surfactant produced according to the invention from the "Coronillo" tree (which continues to be identified as "CU") for controlling gramineae and broad-leaved weeds.

Various studies have pointed to the fact that the herbicide glyphosate at 960 g of active substance/ha is effective in controlling weeds before sowing corn and soya beans on the Pampean plains using direct sowing systems, and applied to weed foliage and in pre-emergence of the crop. However, within the sustainable agriculture model that farmers are currently trying to apply, not only is it necessary to reduce soil erosion, but there must also be a rational administration of pesticides. The use of adjuvants can help reduce the doses of herbicides by increasing their efficacy, which is desirable from both the environmental and economic points of view.

It has also been shown, as was mentioned above, that adjuvants increase the phytotoxicity of glyphosate. However, variations have been observed between the effects of the different surfactants that have been evaluated. Its use improves the wetting and increases the retention and penetration of the herbicide by two possible mechanisms of action: by expansion of the polymer matrix of the cuticle or by the solubility thereof.

However, due to the fact that not all the mechanisms of action of adjuvants are fully understood, it is necessary to subject herbicides to factor-specific tests in combination with adjuvants in order to find out the synergic or conflicting effects of surfactants on the efficacy of the herbicide.

The aim was to evaluate the effect of the coadjuvant on the action of the herbicide glyphosate applied to the control of gramineae and broad-leaved weeds before sowing summer crops.

The test was carried out at the San Carlos establishment in the town of Ingeniero Silveyra, Chacabuco District, in the Province of Buenos Aires. The area is characterised in that it receives an average rainfall of 900/1200 mm/year with a bimodal distribution and has mild winters with a relative humidity above 60%. The potential evapotranspiration is 1450 mm/year. The soil is classed as deep sandy/silty loam with a permeable B horizon, 2.5/2.8% organic matter and a pH of 5.8 to 6.3.

The statistical design used was in random blocks with five repetitions. A total of 7 treatments were evaluated: Glyphosate 48% at a dose of 672 g of active substance/ha, solution and mixture with the surfactant of the invention "CU" at doses of 0.0; 0.02; 0.03; 0.04; 0.05; and 0.06% v/v. A control treatment or absolute control was included. In general, the results showed significant differences for the variables being studied: Effect of surfactants and weed control percentages.

Preliminary studies showed the weed population in the test area, where the following Gramineae type species are predominant in autumn, winter and spring: rescue grass *(Bromus unioloides),* large crabgrass *(Digitaria sanguinalis),* Bermuda grass *(Cynodon dactylon),* foxtail *(Setaria spp),* Italian rye grass *(Lolium multiflorum)* etc.; dicotyledoneae: wild buckwheat *(Polygonum convolvulus),* prostrate knotweed *(Polygonum aviculare),* nettle *(Urtica Urens),* pascalia weed *(Wedelia glauca),* spurred anoda *(Anoda cristata),* lambsquarters *(Chenopodium album)* and radish *(Raphanus sativus).*

They presented an even distribution of active growth (generally between 3 and 9 pairs of leaflets) without signs of stress.

The treatments were applied after the weeds emerged. A backpack sprayer was used, with an electromechanical pump at a constant working pressure of 4 kg and an effective flow of 116 l per hectare of land.

Six treatments were evaluated plus a control with five repetitions in a design of random blocks. The experimental unit consisted of a 30 $m^2$ plot (3x10). The 1.5 m central band was taken into consideration for the evaluation.

Table 1. Treatments

| Treatments | Description |
| --- | --- |
| 1 | Glyphosate 672 g of active substance/ha + CU 0.06 % v/v |
| 2 | " 672 " " 0.05 " |
| 3 | " 672 " "0.04" |

(continued)

| Treatments | Description |
|---|---|
| 4 | " 672 " " 0.03" |
| 5 | " 672 " " 0.02 " |
| 6 | " 672 " |
| 7 | Absolute control. Water + " 0.06 " |

The treatments were evaluated by taking the control percentage of gramineae weeds, broad-leaved weeds and absolute control of the quantitative method 14/21 days after application, on the basis of the following equation:

$$\text{control \%} = \frac{(\text{weight of control weed} - \text{weight of treatment weed}}{\text{weed}} \times 100 \qquad \text{weight of control}$$

The results were compared with the scale approved by the Latin American Weed Association (ALAM).

For the statistical analysis, the results were entered into the Statistical Analysis System and mean separation tests were carried out using Tukey's method for significant effects.

Results and Discussion:

Control percentage of gramineae weeds. The analysis of variance for the control percentage of gramineae detected highly significant differences (P<0.01) between the treatments evaluated. Table 3 shows the means test for this variable. The greatest control percentage was achieved with treatment No. 1 (GI + CU 0.06% v/v), a value that was classed as very good (table 1), there being no statistical difference between this and treatments 2 (GI + CU 0.05) and 3 (GI + CU 0.04), which were classed as good, and treatment 4 (GI + CU 0.03% v/v), which was considered sufficient.

However, statistical differences were determined with treatments 5 (GI + CU 0.02 % v/v) and 6 (GI), which presented controls of 58.9 and 40.5%, respectively, and were classed as average, indicating that they did not provide a satisfactory control of gramineae weeds. These results suggest that the CU + Glyphosate combination at low concentrations of the adjuvant and the chosen concentration of the herbicide do not achieve a satisfactorily adequate control of the gramineae weeds present in the test, such as *Cynodon* and *Digitaria.*

Table 2: Degree of weed control according to the ALAM.

| Rate % | Degree of Control |
|---|---|
| 0 - 40 | none or poor |
| 41 - 60 | average |
| 61 - 70 | sufficient |
| 71 - 80 | good |
| 81 - 90 | very good |
| 91 - 100 | excellent |

Table 3.- Control percentage of gramineae weeds.

| Treatment | Description | Control% |
|---|---|---|
| 1 | Glr 672 g of active substance/ha + CU | 0.06% v/v 84.3[a] very good |
| 2 | " " 0.05 " | 76.7 ab good |
| 3 | " " 0.04 " | 71.3 ab good |
| 4 | " " 0.03 " | 70.6ab sufficient |
| 5 | " " 0.02 " | 58.0bc average |
| 6 | " | 40.5c average |

Glr commercial glyphosate - No significant difference for treatments with the same letter. Tukey's means test (5%).

See figure 1.

Control percentage of broad-leaved weeds. Highly significant differences (P<0.01) were found between the treatments. The means test (table 4) shows that treatment No. 2 (GI + CU 0.05% v/v) has a very good control percentage of ()=.4%). However, there are no statistical differences between this treatment and treatments 1 (CU 0.06% v/v), 3 (CU 0.04% v/v) and 4 (CU 0.03% v/v), although there is with treatment 5 (CU 0.02% v/v). According to the ALAM's scale, all the treatments where the surfactant CU of the invention is mixed with glyphosate Glr have a good to very good level of control.

This suggests that there is a synergic effect of the adjuvant on glyphosate, increasing its effectiveness in controlling broad-leaved weeds.

It can even be seen that glyphosate used alone (treatment 6) presents the lowest effectiveness in controlling this type of weeds, especially *Convolvulus spp* and *Wedella spp,* which are predominant in the test area.

Table 4. Control percentage of broad-leaved weeds.

| Treatment | Description | Control% |
|---|---|---|
| 1 | Glr 672 g of active substance/ha + CU 0.06% v/v | 90.4[a] very good |
| 2 | " " 0.05 " | 80.9[a] very good |
| 3 | " " 0.04 " | 79.1 abc good |
| 4 | " " 0.03 " | 78.4 abc good |
| 5 | " " 0.02 " | 65.6 abc sufficient |
| 6 | " | 61.4c sufficient |

Glr Commercial glyphosate. a,b,: No significant difference for treatments with the same letter. Tukey's means test (5%).

See figure 2.

Total control percentage of weeds. The statistical analysis showed highly significant differences for the treatments evaluated. In table 5 it can be seen that the best control was achieved with treatment No. 1 (CU 0.06% v/v) with a percentage of 81.3%, which is considered very good. There are no statistical differences between treatment 1 (CU 0.06% v/v) and treatments 2 (CU 0.05% v/v), 3 (CU 0.04% v/v) and 4 (CU 0.03% v/v), which are classed as good. However, there are no significant differences between treatment 2 (CU 0.05% v/v) and treatments 5 (CU 0.02% v/v) and 6 (GI), for which the total control percentage of weeds recorded was only 63.4 and 46.9, respectively, classed only as sufficient by the ALAM.

Table 5.- Total control percentage of weeds.

| Treatment | Description | Control% |
|---|---|---|
| 1 | Glr 672 g of active substance/ha + CU 0.06 % v/v | 81.3a very good |
| 2 | " " 0.05 " | 73.6 ab good |
| 3 | " " 0.04 " | 73.6 ab good |
| 4 | " " 0.03 " | 72.1 ab good |
| 5 | " "0.02 " | 59.8 bc average |
| 6 | " | 46.9 c average |

Glr Commercial glyphosate a,b,c: No significant difference for treatments with the same letter. Tukey's means test (5%).

See figure 3.

Conclusions.

The use of the agricultural adjuvant of the invention CU at concentrations of 0.03; 0.04; 0.05 and 0.06% v/v significantly increases the action of the commercial glyphosate herbicide in controlling the weeds present in the area being studied, if compared to the control without surfactants.

Concentrations of 0.06% v/v on some weeds reduces the control of biochemical and physical factors such as runoff of the solution on leaf mass.

The efficacy of glyphosate formulated with the adjuvant of the invention CU at a concentration of 1% in controlling gramineae and broad-leaved weeds has also been tested, the protocols for which, included in the present documentation as Reference "A", show the advantages that it provides.

It has already been said that the use of surfactants improves the distribution of the solution and the subsequent retention on the leaf surface, or translocation, in order to limit the dilution and the effect of the physical forces exerted by rain, which results in the removal of the active substance.

It is of interest to know what effect the surfactant of the invention has on the retention and action of the herbicide glyphosate when exposed to rain after treatment.

To achieve this, the influence of three concentrations of the aqueous extract that constitutes the adjuvant of the present invention was therefore evaluated, the full analysis of which is included in this documentation as Reference "B". The behaviours of several surfactants commonly used in agriculture have been studied in various situations and for different intervals. The results of this show the optimum behaviour of the adjuvant of the present invention.

To complement this, another field evaluation of Glyphosate formulated with the surfactant extract is also included as Reference "C", a 1% concentration of the invention being used for controlling gramineae and broad-leaved weeds, with strict test conditions for different formulations of the active substance, similar to the evaluation described above, to achieve the optimum results.

Some of the possibilities for application of the adjuvant in agrochemicals have been described, thereby providing more specific details about the invention and the way in which it works. It has been stated that several other second active components can be used in each specific formulation, preferably obtained from natural elements that maintain the organic nature of the product for application in agriculture, active substances that are in themselves known, combined, according to the invention, with the first essential component comprised of the natural adjuvant produced by processing the seedless fruits of *Gleditsia Amorphoides* in chemically pure aqueous solution.

Certain specific applications have also been described, the documentation being complemented by the summary of the invention contained in the following claims.

Having described and determined the nature of the invention, its scope and the way in which it can be put into practice in terms of its fundamental idea, the following claims are stated as an invention with exclusive ownership rights:

**Claims**

1. Extract of the seedless pod of *Gleditsia Amorphoides* and its use as an agricultural adjuvant, **characterised in that** it has a content of soluble solids between 250 - 270 g/kg; of triterpene saponins between 60 - 75 g/kg; a conductivity (5 Brix) of 6 +/- 4mS/cm; an absorbance at 400nm (with 1.1% of the product in water) of < 0.500 AU; a foam production (5 Brix) of 160 ml; a pH (direct) equal to 3.9 +/- 0.3; whilst its chemical determination in g per 100g of the extract expressed as elements is total Ni = 0.51; available P = 0.28; K = 1.22; S = 0.63; Mg = 0.08 and Fe = 0.0022; whilst available P (expressed as 05P) = 0.64 and K (expressed as KO) = 1.47; moreover, the total quantity of phenols is approximately between 8.5 and 10% and of tannins is between 0.9 and 1.5%.

2. Extract of the seedless pod of *Gleditsia Amorphoides* and its use as an agricultural adjuvant, according to claim 1.-, **characterised in that**, when subjected to tests, said adjuvant extract gives the following results: Oral toxicity in rats >4000mg/kg; inhalatory toxicity at a maximum nebulisable concentration of 4.89 mg/l; Primary Dermal irritation and Ames Test, Cytotoxicity: showing that it lacks toxicity.

3. Extract of the seedless pod of *Gleditsia Amorphoides* and its use as an agricultural adjuvant, according to claims 1. and, 2.-, **characterised in that** its absorbance at 3 Brix is between 1,230 and 1,120.

4. Extract of the seedless pod of *Gleditsia Amorphoides* and its use as an agricultural adjuvant, according to claims 1.- to 3-, **characterised in that** it is highly soluble in water.

5. Extract of the seedless pod of *Gleditsia Amorphoides* and its use as an agricultural adjuvant according to claim 1.-, **characterised in that** 1 g/l of Na benzoate is used as a compatible preservative.

6. Extract of the seedless pod of *Gleditsia Amorphoides* and its use as an agricultural adjuvant according to claim 1.-, **characterised in that** it is produced by treating the husk of the seedless pod of *Gleditsia Amorphoides.*

7. Use of the extract of the seedless pod of *Gleditsia Amorphoides* as an agricultural adjuvant, according to claim 1.-, **characterised in that**, for its use as a fertiliser, it is made up of two essential components, wherein a first component consists of the natural organic coadjuvant extract consisting of 30/60cc of an aqueous solution of said extract of the *Gleditsia Amorphoides* fruit containing 250-270 g/kg of total soluble solids; 60-75 g/kg of triterpene saponins, and presenting a conductivity (5 Brix) of 5.6+/-4; an absorbance at 400 nm (with 1.1% of the product in water, v/v) of <0.500 AU; a foam production (5 Brix, ml) of >160ml; a pH (direct) of 3.9 +/-0.3 and a surface tension of 38 to 40 dyn/cm; whilst the second active component consists of 1000cc of a solution in pure water of granulated urea with a low Biuret content, < 0.5%, with a Ni content of 20%.

8. Use of the extract of the seedless pod of *Gleditsia Amorphoides* as an agricultural adjuvant, according to claim 1.- and 7.-, **characterised in that** the solution of said fertiliser is made up using pure water with pH 7 and with no hardness in the form of Ca+ and Mg+ ions.

9. Use of the extract of the seedless pod of *Gleditsia Amorphoides* as an agricultural adjuvant, according to claim 1.-, **characterised in that**, for a glyphosate type herbicide at a proportion of 672 g of active substance/ha, 0.06% v/v of the extract is added as an adjuvant.

10. Use of the extract of the seedless pod of *Gleditsia Amorphoides* as an agricultural adjuvant, according to claim 1.-, **characterised in that**, for formulations of herbicides, 1.0 to 1.5% v/v of the extract is added to the final formulation of the product.

11. Use of the extract of the seedless pod of *Gleditsia Amorphoides* as an agricultural adjuvant, according to claim 1.-, **characterised in that**, in a pyrethroid type insecticide used for controlling the citrus leafminer, *(Phyllocnistis citrello Staiton),* between 0.25 and 0.50% of the adjuvant is used with 0.15% of avermectin.

12. Use of the extract of the seedless pod of *Gleditsia Amorphoides* as an agricultural adjuvant, according to claim 1.-, **characterised in that**, for a Paraquat type defoliant, the formulation comprises approximately 0.25% v/v of the aqueous extract, an emulsifiable oil at 1% and a 11/ha concentration of Paraquat.

13. Use of the extract of the seedless pod of *Gleditsia Amorphoides* as an agricultural adjuvant, according to claim 1.-, **characterised in that**, for a nitrogenated fertiliser, the formulation is made up of between 10 and 46 g/100g of organic Ni and between 30 and 60 cc of the aqueous extract, with a pH of 6.9, a Biuret content of 0.15g/100g and a surface tension of 36.6 dyn/cm.

14. Use of the extract of the seedless pod of *Gleditsia Amorphoides* as an agricultural adjuvant, according to claim 1.-, **characterised in that**, for a spray solution, 30 to 60 ml of said aqueous extract is added directly for each 100 litres of solution.

15. Use of the extract of the seedless pod of *Gleditsia Amorphoides* as an agricultural adjuvant, according to claim 1.-, **characterised in that** the extract is added as an adjuvant to all types of biocides, such as herbicides, fungicides and insecticides.

**European Patent
Office**

**EUROPEAN SEARCH REPORT**

Application Number

EP 06 38 0329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE CAPLUS [Online] CHEMICAL ABSTRACTS SERVICE, COLUMBUS, OHIO, US; 1957, LUIS L. PRADO & ENZO RICCI: "Systematic study of the tannin content of various indigenous species" XP002432941 retrieved from STN accession no. 1957:52695 Database accession no. 51:52695 * abstract * | 1-6 | INV. A01N65/00 A01N57/20 A01N53/00 A01N43/90 A01N43/40 A01N25/30 C05G3/06 |
| X | & L.L.PRADO & E. RICCI: ANALES ADMIN.NACL.BOSQUES, REP. ARG., 1956, pages 7-17, ----- | 1-6 | |
| P,X | DATABASE CAPLUS [Online] CHEMICAL ABSTRACTS SERVICE, COLUMBUS, OHIO, US; 24 August 2006 (2006-08-24), J. JIANG ET AL.: "Preparation and application of Gleditsia sinensis saponin" XP002432942 retrieved from STN accession no. 2006:843775 Database accession no. 145:451900 * abstract * | 1-7,14, 15 | |
| X | & CN 1 696 145 A (BEIJING FORESTRY UNIVERSITY) 16 November 2005 (2005-11-16) ----- | 1-7,14, 15 | TECHNICAL FIELDS SEARCHED (IPC) A01N C05G |
| X | US 2005/158403 A1 (LEE CHEN-YUNG [TW]) 21 July 2005 (2005-07-21) * paragraphs [0006], [0007], [0016] - [0027], [0033], [0052], [0063]; examples I-VI * ----- | 1-7,14, 15 | |

-/--

The present search report has been drawn up for all claims

| Place of search | Date of completion of the search | Examiner |
|---|---|---|
| Munich | 10 May 2007 | Klaver, Jos |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**European Patent Office**

# EUROPEAN SEARCH REPORT

Application Number

EP 06 38 0329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | L. ZHONG, P. LI, J. HAN, G. QU & D. GUO: "Structure-activity relationships of saponins from Gleditsia sinensis in cytotoxicity and induction of apoptosis" PLANTA MED., vol. 70, 2004, pages 797-802, XP002432937 * page 797, column 1, paragraph 1 * * page 798, column 1, paragraph 2 * * figure 1; table 1 * | 1-6 | |
| A | DATABASE CAPLUS [Online] CHEMICAL ABSTRACTS SERVICE, COLUMBUS, OHIO, US; 1955, TOMAS RIQUE & LUIS L. PARDO: "The gum from the seed (pods) of Gleditsia amorphoides" XP002432943 retrieved from STN accession no. 1955:37945 Database accession no. 49:37945 * abstract * | 1-6 | |
| A | & T. RIQUE & L.L. PARDO: PUBL. TECN., no. 19, 1954, pages 1-30, Rep. Argentina, Ministerio Agr. y Ganaderia | | **TECHNICAL FIELDS SEARCHED (IPC)** |
| A | GB 1 065 910 A (ANALYSES ET DE RECH S BIOLOG M) 19 April 1967 (1967-04-19) * page 1, lines 13-40,49-60 * * page 1, line 80 - page 2, line 2 * | 1-6 | |

The present search report has been drawn up for all claims

| Place of search | Date of completion of the search | Examiner |
|---|---|---|
| Munich | 10 May 2007 | Klaver, Jos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 06 38 0329

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2007

| Patent document cited in search report | | Publication date | Patent family member(s) | | | Publication date |
|---|---|---|---|---|---|---|
| CN 1696145 | A | 16-11-2005 | NONE | | | |
| US 2005158403 | A1 | 21-07-2005 | CN | 1557168 | A | 29-12-2004 |
| GB 1065910 | A | 19-04-1967 | BE | 675305 | A | 16-05-1966 |
| | | | DK | 112813 | B | 20-01-1969 |
| | | | DK | 111973 | B | 28-10-1968 |
| | | | FR | 95953 | E | 19-05-1972 |
| | | | FR | 1602259 | A | 02-11-1970 |
| | | | NL | 6601202 | A | 02-08-1966 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1102056
- CN 1122653
- CN 1153599
- CN 1168228
- CN 1433696

**Non-patent literature cited in the description**

- **MAKKAR H.P.S. ; BLUEMMEL.M. ; BOROWY N.K.** *J.Sci. Food Agric.,* 1993, vol. 61, 161-165